# EUROPÄISCHE PATENTSCHRIFT

(11) **EP 3 956 754 B1**
(45) Veröffentlichungstag und Bekanntmachung des Hinweises auf die Patenterteilung: **24.09.2025**
(21) Anmeldenummer: 21701295.4
(22) Anmeldetag: 20.01.2021
(51) Int. Cl.: G06F 3/01, G06F 3/0354

(54) **BEDIENELEMENT MIT ABGESTIMMTER SCHWINGUNGSEINKOPPLUNG IN DAS BERÜHRTEIL ZUR ERZEUGUNG EINES HAPTISCHEN FEEDBACKS**
OPERATING ELEMENT WITH TUNED VIBRATION COUPLING INTO THE TOUCH PART TO GENERATE HAPTIC FEEDBACK
ÉLÉMENT DE COMMANDE AVEC COUPLAGE VIBRATOIRE ACCORDÉ DANS LA PARTIE TACTILE POUR LA GÉNÉRATION D'UN RETOUR HAPTIQUE

(30) Priorität: 30.01.2020 DE 102020102285
(43) Veröffentlichungstag der Anmeldung: 23.02.2022
(73) Patentinhaber: Preh GmbH, 97616 Bad Neustadt a.d. Saale (DE)
(72) Erfinder: BODENSTEIN, Tobias, 97616 Salz (DE); FREY, Markus, 36093 Künzell (DE)
(74) Vertreter: Lohmanns, Bernard
(86) Internationale Anmeldenummer: PCT/EP2021/051175
(87) Internationale Veröffentlichungsnummer: WO 2021/151755

(56) Entgegenhaltungen:
- EP-A1- 2 369 444
- EP-A1- 2 418 705
- WO-A1-2019/011906
- DE-A1- 102012 020 164
- DE-A1- 102017 104 979
- DE-A1- 102018 108 040

## Beschreibung

Das Dokument WO 2019/011906 A1 offenbart ein Steuerelement mit taktiler Eingabe und haptischer Rückkopplung. Die Erfindung ist in den unabhängigen Ansprüchen dargelegt. Bevorzugte Ausführungsformen sind in den abhängigen Ansprüchen definiert.

Die Erfindung betrifft ein Bedienelement mit einem aktiven Aktuator zur Erzeugung einer für den Bediener haptisch merkbaren Rückmeldung, im Folgenden auch haptisches Feedback genannt. Bei dem aktiven Aktuator, im Folgenden nur kurz als Aktuator bezeichnet, handelt es sich um einen durch eine Steuerelektronik triggerbaren Aktuator, der durch einen Impulseintrag, wie Stoßeintrag, oder Schwingungseintrag in die angrenzend angeordnete Komponente des Bedienelements in der Lage ist, eine Schwingung anzuregen, die letztlich dazu bestimmt ist, die die von einem Berührteil definierte Berührfläche zu erreichen, die zur Berührung durch den Bediener zum Zwecke der Vornahme einer Bedieneingabe vorgesehen ist. Die dort vorliegende Oberflächenschwingung wird vom Bediener als haptisches Feedback wahrgenommen, wobei die dabei wahrgenommene Intensität von der Schwingung selbst auch von weiteren Einflüssen, wie Anpressdruck, Geometrie der zwischen Finger und Berührfläche ausgebildeten Fingerauflagefläche etc. abhängt. Beispielsweise handelt es sich bei dem aktiven Aktuator um einen Motor auf dessen rotierender Antriebswelle eine bezüglich ihres Schwerpunkts exzentrisch montierte Masse festgelegt ist. Die durch die rotierende Masse erzeugte Schwingung wird als Körperschall in den Träger eingebracht, an dem der Aktuator festgelegt ist, um letztlich bis zur Berührfläche vorzudringen. In der Regel weist die Bedienfläche eine im Vergleich zur Einkoppelfläche des Aktuators vergleichsweise große Ausdehnung auf, was für sich genommen schon problematisch ist, wenn ein über die gesamte Berührfläche gleichmäßiges haptisches Feedback bei hypothetisch gleichbleibenden äußeren Bedingungen, wie Anpressdruck und Geometrie der Berührfläche, erzeugt werden soll.

Dazu kommt, wie oben bereits erwähnt, dass aufgrund der Geometrie der Berührfläche, die nicht zwingend eben sein muss, sondern auch Erhebungen oder Vertiefungen als haptisch merkbare Orientierungshilfen aufweisen kann, die Auflagefläche des Fingers auf der Berührfläche selbst bei gleichem Anpressdruck des Fingers stark variieren kann. Aufgrund dessen variiert das haptische Empfinden stark mit der Geometrie der Berührfläche. Weitere Probleme ergeben sich bei der Platzierung des Aktuators, wenn das die Berührfläche definierende Berührteil zur Vornahme einer Bedieneingabe durch den Bediener relativ zum Träger platziert ist. Oft ist eine Platzierung des Aktuators unmittelbar am Berührteil nicht möglich, so dass eine effektive Schwingungsübertragung zur Berührfläche den Konstrukteur vor Schwierigkeiten stellt.

Vor diesem Hintergrund bestand Bedarf nach einer Lösung für ein Bedienelement, bei dem die für das haptische Feedback vorgesehene Schwingungsübertragung von einem Aktuator zu einer für die Vornahme einer Bedieneingabe vorgesehenen Berührfläche bei der konstruktiven Auslegung auf die Berührfläche, beispielsweise deren Geometrie, abgestimmt werden kann, insbesondere über die Berührfläche angeglichen ("harmonisiert") werden kann. Dies soll möglichst mit vergleichsweise geringem Bauvolumen und hoher Integrationsdichte erreicht werden, wobei insbesondere eine hohe Zuverlässigkeit realisiert sein soll. Diese Aufgabe wird durch ein Bedienelement gemäß Anspruch 1 gelöst. Eine gleichermaßen vorteilhafte Verwendung ist Gegenstand des nebengeordneten Anspruchs. Vorteilhafte Ausgestaltungen sind jeweils Gegenstand der abhängigen Ansprüche, Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich,

Die Erfindung betrifft ein Bedienelement. Der Begriff "Bedienelement" ist weit auszulegen und dient der Vornahme einer Bedieneingabe mittels eines bewegbaren Berührteils im Rahmen einer Mensch-Maschine-Schnittstelle.

Das erfindungsgemäße Bedienelement weist einen Träger auf. Der Träger dient der Festlegung des Bedienelements an einer Blende oder Innenverkleidung, wie einem Armaturenbrett eines Kraftfahrzeugs. Der Träger ist beispielsweise aus einem Kunststoff, einem Metall oder einer metallischen Legierung, wie ZAMAK, oder Kombinationen daraus ausgebildet,

Das Bedienelement weist erfindungsgemäß einen mittels einem oder mehrerer Schwingungsdämpfer am Träger gelagerten Zwischenträger auf. Erfindungsgemäß ist ferner ein Berührteil vorgesehen, welches eine einem Bediener zugewandte Berührfläche zur Vornahme einer Bedieneingabe durch einen Bediener aufweist und mit dem Zwischenträger verbunden ist. Dieses Berührteil kann auch je nach Auslegung auch als Betätigungsteil bezeichnet werden. Als Bedieneingabe wird eine händische Berührung oder gegebenenfalls eine Betätigung unter Berührung durch einen Bediener verstanden. Der Begriff Schwingungsdämpfer im Sinne der Erfindung meint, dass im Zwischenträger angeregte Schwingungen wenn überhaupt allenfalls gedämpft in den Träger übertragen werden. Das Berührteil ist in einer bevorzugten Ausgestaltung ferner gegenüber dem Träger verlagerbar und/oder verformbar ausgebildet, um nicht nur durch Berührung sondern durch Betätigung des Berührteils eine Bedieneingabe durch den Bediener vornehmen zu können. Beispielsweise ist das Berührteil bzw. Betätigungsteil translatorisch entlang eines linearen Verstellwegs rückstellend verlagerbar am Träger gelagert. Bevorzugt sind die Schwingungsdämpfer so angeordnet, dass sie neben der Schwingungsdämpfung ferner die Rückstellung des Berührteils samt des Zwischenträgers aus einer Betätigungsstellung in eine Ruhestellung bewirken. Beispielsweise ist das Berührteil flächig ausgebildet und weist eine maximale Dicke von 5 mm bevorzugt 3 mm auf.

Erfindungsgemäß ist ferner ein Aktuator vorgesehen, der ausgebildet ist, eine Schwingung in dem Zwischenträger anzuregen. Bei dem Aktuator handelt es sich erfindungsgemäß um einen aktiven Aktuator, also einen durch ein von einer Steuerelektronik bereitgestelltes Ansteuersignal triggerbaren Aktuator, der durch einen Impulseintrag, wie Stoßeintrag, oder Schwingungseintrag in die angrenzend angeordnete Komponente, nämlich den Zwischenträger, in der Lage ist, in dieser eine Schwingung anzuregen, wobei die Schwingung letztlich dazu bestimmt ist, die die von dem Berührteil definierte Berührfläche zu erreichen, die zur Berührung durch den Bediener zum Zwecke der Vornahme einer Bedieneingabe vorgesehen ist. Bevorzugt handelt es sich bei dem Aktuator um einen auf Trägheit beruhenden, motorbasierten Aktuator, wie einen Motor auf dessen rotierender Antriebswelle eine bezüglich ihres Schwerpunkts exzentrisch montierte Masse festgelegt ist oder einen Magnetspulen-Aktuator oder einen piezoelektrischen Aktuator oder einen linearen Breitbandaktuator, wie einen Tauchspulenaktuator (englische Bezeichnung; Voice-Coil-Actuator) oder einen linearen Resonanzaktuator. Bevorzugt ist der Aktuator ausschließlich am Zwischenträger kraft- oder stoffschlüssig festgelegt, beispielsweise durch Verschrauben oder Verkleben. Bevorzugt ist der Aktuator in einem vom Zwischenträger und dem Berührteil begrenzten Hohlvolumen angeordnet.

Erfindungsgemäß ist der Zwischenträger auf einer der Berührfläche abgewandten Seite an das Berührteil unter Ausbildung einer gemeinsamen Kontaktfläche angrenzend angeordnet, um über die Kontaktfläche die Schwingung zur Erzeugung eines an der Berührfläche haptisch merkbaren Feedbacks in das Berührteil einzukoppeln.

Erfindungsgemäß ist ferner ein Sensor zur Detektion einer Betätigung des Berührteils und/oder einer Berührung der Berührfläche vorgesehen. Bevorzugt ist der Sensor ein Berührungssensor zur Detektion einer Berührung der Berührfläche oder ein Kraftsensor zur Messung einer durch eine Betätigung bewirkten Verlagerung und/oder durch die Betätigung bewirkten, elastischen Verformung des Berührteils. Beispielsweise ist der Berührsensor ein kapazitiver Berührsensor, wie ein kapazitiver ortsauflösend detektierender Berührsensor. In einer anderen Ausgestaltung ist ein Kraftsensor dadurch realisiert, dass das Berührteil entgegen einer Rückstellung gegenüber dem Träger elastisch verlagerbar und/oder verformbar ausgestaltet ist und ein Abstand zwischen dem Träger und dem Berührteil, optisch, kapazitiv oder induktiv detektiert wird. Der Berührsensor weist beispielsweise eine ein Array aus mehreren Elektroden umfassenden Folienschichtaufbau auf, der zwischen dem Zwischenträger und dem Berührteil angeordnet ist.

Ferner ist erfindungsgemäß eine mit dem Aktuator und dem Sensor elektrisch verbundene Steuerelektronik vorgesehen, um das haptische Feedback mit einem Ansteuersignal, mit welchem der Aktuator beaufschlagt wird, zu triggern, sobald beispielsweise eine Berührung durch den Sensor detektiert wird oder eine bei der Betätigung aufgebrachte und von dem Sensor detektierte Betätigungskraft einen vorgegebenen Wert übersteigt.

Erfindungsgemäß umfasst die Kontaktfläche eine oder mehrere, im Vergleich zur Gesamtheit der Kontaktfläche insgesamt kleinere Verbindungsbereiche, in denen der Zwischenträger mit dem Berührteil stoffschlüssig verbunden ist. Bevorzugt macht die Gesamtfläche aller Verbindungsbereiche nicht mehr als 1/10, bevorzugt nicht mehr als 1/50, der gesamten Kontaktfläche aus. Bevorzugt liegt das Berührteil im dem außerhalb des oder der Verbindungsbereiche liegenden Bereich der Kontaktfläche lose am Zwischenträger an.

An den Verbindungsbereichen wird durch die stoffschlüssige Verbindung eine besonders effektive Schwingungseinkopplung aus dem Zwischenträger in das Berührteil erreicht. Durch selektive Platzierung der Verbindungsbereiche innerhalb der Kontaktfläche bei der konstruktiven Auslegung des Bedienelements ist somit eine gewünschte Schwingungsverteilung im Berührteil und damit auf der Berührfläche ermöglicht. Beispielsweise ist der Verbindungsbereich oder sind die Verbindungsbereiche so platziert, dass ein über den Verlauf der Berührfläche gleichmäßiges haptisches Feedback, beispielsweise trotz einer unebenen Berührfläche, erreicht wird.

Gemäß einer bevorzugten Ausgestaltung des Bedienelements bildet das Berührteil in der Berührfläche wenigstens eine Erhebung oder Senke als haptische Orientierungshilfe aus. Dadurch, dass über die Verbindungsfläche selektiv und lediglich bereichsweise verstärkt Schwingung vom Zwischenträger in das Berührteil eingekoppelt wird, kann durch entsprechende Gestalt und Platzierung des Verbindungsbereichs der verstärkende Effekt, der sich daraus ergibt, dass bei Vertiefungen und oder Erhebungen die Fingerauflageflächengeometrie zwischen dem Finger und der Berührfläche selbst bei gleichem Anpressdruck des Fingers verändert ist und das haptische Feedback dadurch stärker haptisch wahrgenommen wird, gegenkompensiert werden.

In einer anderen Ausgestaltung sorgt die Platzierung des Verbindungsbereichs für eine "gezielte Verstärkung" So ist der Verbindungsbereich jeweils in der Nähe von vorgesehenen Berührbereichen/Orientierungshilfen platziert. Vorgesehene Berührbereiche sind beispielsweise durch Orientierungshilfen oder sichtbare Symbole gekennzeichnet oder weisen benachbart Elektroden zur kapazitiven Berührerkennung auf. In der Nähe im Sinne der Erfindung meint beispielsweise bei senkrechter Projektion auf die Berührfläche "unterhalb" oder "seitlich versetzt unterhalb" des vorgesehen Berührbereichs.

Bevorzugt ist der Verbindungsbereich jeweils versetzt zum Lot durch den geometrischen Mittelpunkt der Berührfläche angeordnet. Gemäß einer bevorzugten Ausgestaltung ist der Verbindungsbereich benachbart zu einem äußeren Rand der Berührfläche und entlang des Randes umlaufend angeordnet oder er ist benachbart zum äußeren Rand der Berührfläche und entlang des Randes gleichmäßig verteilt angeordnet.

Beispielsweise ist der Verbindungsbereich durch Verkleben mit dem Berührteil im Verbindungsbereich stoffschlüssig verbunden. Dabei ist darauf zu achten ist, dass die Klebeverbindungen jeweils ausgehärtet sind. Beispielsweise wird UV-härtender Klebstoff oder 2K-Klebstoff oder feuchteaushärtender Klebstoff zur Herstellung der stoffschlüssigen Verbindungen verwendet. Bevorzugt ist die stoffschlüssige Verbindung im Verbindungsbereich so ausgestaltet, dass minimal das größte Elastizitätsmodul der verbundenen Materialien von Zwischenträger bzw. Blende im Verbindungsbereich erreicht ist. "Weichere" Verbindungen im Verbindungsbereich sind nicht als geeignet anzusehen, da diese die Schwingungsübertragung dämpfen bzw. absorbieren.

Bevorzugt ist der Zwischenträger mit dem Berührteil durch Verschweißen, wie Ultraschallverschweißen, im Verbindungsbereich stoffschlüssig verbunden. Bevorzugt sind das Berührteil und der Zwischenträger zumindest im Verbindungsbereich jeweils aus einem Thermoplast ausgebildet. Noch bevorzugter sind das Berührteil und der Zwischenträger jeweils vollständig aus einem Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) ausgebildet. Bevorzugt sind das Berührteil und/oder der Zwischenträger in einem Thermoplast-Spritzgussverfahren hergestellt. Bevorzugt ist das Berührteil durch Hinterspritzen einer Folie aus einem ersten Thermoplast mit einem zweiten Thermoplast hergestellt.

Bevorzugt ist der Schwingungsdämpfer ein ein oder mehrere Elastomere aufweisender Körper. Noch bevorzugter ist der Schwingungsdämpfer ein ein silikonhaltiges Elastomer aufweisender Körper.

Gemäß einer bevorzugten Ausgestaltung des erfindungsgemäßen Bedienelements ist der Verbindungsbereich jeweils an einer Auskragung des Zwischenträgers ausgebildet, mittels der sich der Zwischenträger über den Schwingungsdämpfer am Träger abstützt. Beispielsweise ist der Schwingungsdämpfer aus Sicht des Bedieners unterhalb des Verbindungsbereichs und auf der dem Verbindungsbereich und dem Bediener abgewandten Seite der Auskragung und dabei zwischen der Auskragung des Zwischenträgers und dem Träger angeordnet. Bevorzugt dient der Schwingungsdämpfer bzw. dienen die Schwingungsdämpfer dem Zwischenträger als alleinige Abstützung am Träger, um den Zwischenträger vom Träger schwingungstechnisch zu entkoppeln, bzw. die Schwingungen des Zwischenträgers zu dämpfen.

Bevorzugt ist der Aktuator über einen weiteren Schwingungsdämpfer am Zwischenträger festgelegt, beispielsweise ist der weitere Schwingungsdämpfer ein Elastomerkissen, bevorzugt ein Silikonelastomerkissen. Der weitere Schwingungsdämpfer sorgt dafür, dass sekundäre Schwingungen des Aktuators, nämlich die der primären, durch den Aktuator bewirkten Anregung zeitlich folgende Schwingungen, wie Nachschwingungen des Aktuators allenfalls gedämpft in den Zwischenträger eingekoppelt werden.

Die erfindungsgemäßen Ausführungsformen eignen sich insbesondere ein vom Bediener als "präzise" empfundenes haptisches Feedback zu erzeugen. Es ist allgemein aus der Literatur bekannt, dass das haptische Auflösungsvermögen des menschlichen Fingers zwei abfolgende Schwingungsausschläge erst ab einem zeitlichen Abstand von ~25ms als getrennt wahrnimmt. Somit werden alle in diesem Zeitintervall liegenden Schwingungen, die das Berührteil erfährt und über die Berührfläche in den Finger des Bedieners einkoppelt, als ein einziger "haptischer Impuls" wahrgenommen. Die am Berührteil gemessene Systemantwort auf die Anregung durch den Aktuator, ist also bevorzugt durch geschickte Wahl des Ansteuersignals und/oder Dämpfung mittels des Schwingungsdämpfers bzw. mittels des weiteren Schwingungsdämpfers, sofern vorhanden, so gestaltet, dass die maximal erreichbare Amplitude der Systemantwort, auch absolute Maximalamplitude genannt, innerhalb eines Zeitfensters von < 20ms, bevorzugt 15ms, erreicht ist, welches beispielsweise durch die erste haptisch merkbare Schwingungsauslenkung angetriggert, d.h. ausgelöst, ist. Der Einfachheit halber und eine nahezu unverzögerte Schwingungsreaktion des Berührteils auf das Ansteuersignal voraussetzend wird hier angenommen, dass das vorgenannte Zeitfenster durch den Beginn des Ansteuersignals angetriggert ist.

Meist bevorzugt wird die erste absolute Maximalamplitude mit der ersten oder spätestens zweiten Auslenkung des Berührteils erreicht.

Gemäß einer weiteren bevorzugten Ausgestaltung sind der Zwischenträger durch den ersten Schwingungsdämpfer und/oder der Aktuator mittels des weiteren Schwingungsdämpfers so bedämpft, dass die "Abklingzeit" der am Berührteil gemessenen Systemamplitude, gemessen von 100% der Maximalamplitude auf 10% oder weniger der Maximalamplitude < 30ms, bevorzugt < 25ms, meist bevorzugt <20ms ist.

Dazu ist ferner die Dauer des elektrischen Ansteuersignals, welches im Allgemeinen periodisch ist und mit dem der Aktuator beaufschlagt wird, auf eine Dauer deutlich unter 20ms, d.h auf wenige Perioden, wie maximal 2 Perioden beschränkt. Die Resonanzfrequenz des Aktuators liegt bevorzugt im Bereich von 110Hz bis 170Hz, meist bevorzugt im Bereich von 130Hz bis 150Hz. Die Frequenz, gegebenenfalls die Grundfrequenz, des Ansteuersignals liegt bevorzugt im Bereich von 100Hz bis 300Hz, meist bevorzugt im Bereich von 120Hz bis 180Hz.

Durch diese Art der Ansteuerung und diese Art des Aktuators kann ein haptisches Feedback mit geringem Aufwand erzeugt werden, das als einzelner Impuls wahrgenommen werden. Alternativ kann die gewünschte Abklingzeit dadurch eingestellt werden, wenn der Aktuator mit einem Ansteuersignal gegenphasig, d.h. beispielsweise mit einem Signal entgegengesetzter Polarität angesteuert wird. Dies erfordert aber eine genaue Kalibrierung oder Steuerung bzw. zusätzliche Sensorik.

Die Erfindung betrifft ferner die Verwendung des Bedienelements in einer der zuvor beschriebenen Ausführungsformen in einem Kraftfahrzeug.

Die Erfindung wird anhand der nachfolgenden Figuren näher erläutert. Die Figuren sind dabei nur beispielhaft zu verstehen und stellen lediglich bevorzugte Ausführungsvarianten dar. Es zeigen:
- Fig. 1: eine Explosionsdarstellung einer ersten Ausführungsform des erfindungsgemäßen Bedienelements 1;
- Fig. 2: eine Schnittansicht einer zweiten Ausführungsform des erfindungsgemäßen Bedienelements 1;
- Fig. 3: eine Schnittansicht einer dritten Ausführungsform des erfindungsgemäßen Bedienelements 1;
- Fig. 4: eine Schnittansicht einer vierten Ausführungsform des erfindungsgemäßen Bedienelements 1;
- Fig. 5a - 5c: Darstellungen verschiedener erfindungsgemäßer Ansteuersignale und zugehörige Systemantworten.

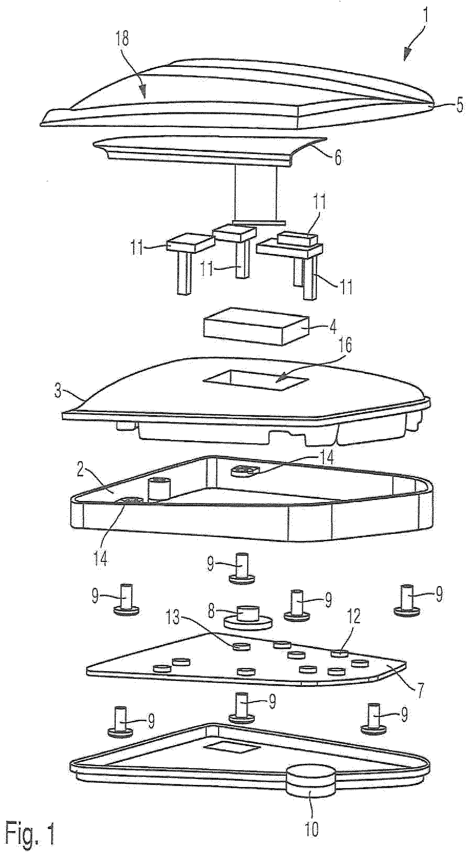

Figur 1 zeigt eine erste Ausführungsform des erfindungsgemäßen Bedienelements 1. Das Bedienelement 1 weist einen Träger 2 zur Festlegung an einer nicht dargestellten Innenverkleidung eines Kraftfahrzeugs auf. An dem Träger 2 stützt sich über mehrere Elastomerkissen als Schwingungsdämpfer 14 ein Zwischenträger 3 elastisch nachgebend ab, wobei die Schwingungsdämpfer 14 rückstellend und schwingungsdämpfend wirken. In einem vom Zwischenträger 3 ausgebildeten Hohlvolumen 16 ist ein aktiver Aktuator 4 vorgesehen, der dazu dient, bedarfsweise Schwingungen in dem Zwischenträger 3 zu erzeugen, die an ein Berührteil 5 übertragen werden, um auf dessen Berührfläche 18 ein für ein Bediener haptisch merkbares Feedback zu erzeugen. Das Berührteil 5 ist dazu bereichsweise durch stoffschlüssige Verbindung am Zwischenträger 3 festgelegt, während in anderen Bereichen außerhalb dieser stoffschlüssigen Verbindung eine angrenzende Anordnung des Berührteils 5 an den Zwischenträger 3 vorgesehen ist. Zwischen dem Berührteil 5 und dem Zwischenträger 3 ist ferner ein ein Array von Elektroden beinhaltender Folienschichtaufbau als Berührsensor 6 vorgesehen, der der kapazitiven Berührdetektion dient. Ferner sind mehrere Durchbrüche im Zwischenträger ausgebildet, in denen die Durchbrüche durchgreifend mehrere Lichtleiter 11 zur Hinterleuchtung transluzenter Anzeigenbereiche des Berührteils 5 angeordnet sind. Die zugehörigen Leuchtmittel 13 sowie eine Steuerelektronik 12, die mit den Elektroden des Folienschichtaufbaus 6 elektrisch leitend verbunden ist, sind auf einer Leiterplatte 7 angeordnet, die auf der dem Bediener abgewandten Seite des Zwischenträgers 3 am Träger 2 durch Schrauben 9 festgelegt ist. Der rahmenförmige Träger 2 ist auf der dem Bediener abgewandten Seite durch einen Deckel 10 abgedeckt.

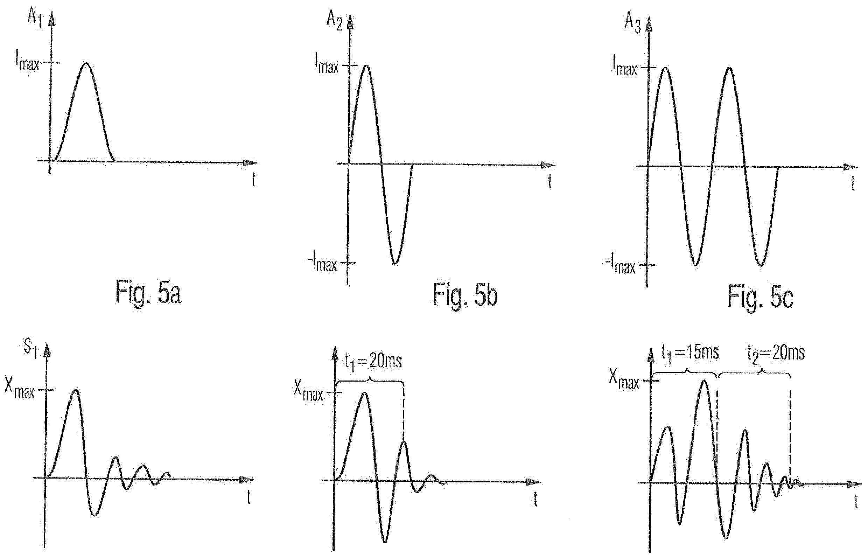

Auf der Leiterplatte 7 ist ferner ein optischer oder kapazitiv detektierender Kraftsensor 8 angeordnet und mit der Steuerelektronik 12 elektrisch leitend verbunden, der durch Detektion der Annäherung des Zwischenträgers 3 an den Träger 2 bei Einwirken einer Betätigungskraft auf die Berührfläche 18 des Berührteils 5 in der Lage ist, die dabei wirkende Kraft quantitativ zu ermitteln. So wird beispielsweise sobald eine Berührung mit Hilfe des Arrays von Elektroden des Berührsensors 6 und/oder sobald eine eine vorgegebene Betätigungskraft überschreitende Krafteinwirkung auf das Berührteil 5 durch den Kraftsensor 8 detektiert wird, eine Erzeugung eines haptischen Feedbacks getriggert, indem der Aktuator 6 mit einem Ansteuersignal durch die Steuerelektronik 12 beaufschlagt wird, was ausführlich in Bezug auf die Figuren 5a bis 5c nachfolgend erläutert wird.

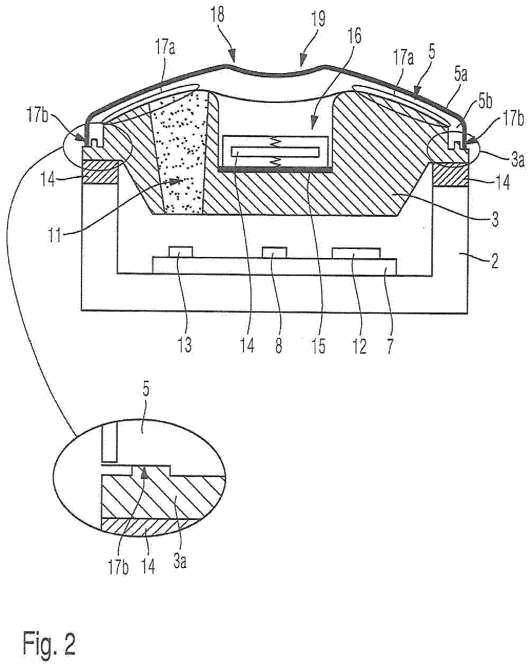

Figur 2 zeigt eine zweite Ausführungsform eines erfindungsgemäßen Bedienelements 1. Das Bedienelement 1 weist einen Träger 2 zur Festlegung an einer nicht dargestellten Innenverkleidung eines Kraftfahrzeugs auf. An dem Träger 2 stützt sich über mehrere als Elastomerkörper ausgebildete Schwingungsdämpfer 14 der Zwischenträger 3 elastisch nachgebend ab. Dazu weist der Zwischenträger 3 einen am Rand des Zwischenträgers 3 umlaufende Auskragung 3a auf, die mit ihrer dem Bediener abgewandten Seite auf dem Schwingungsdämpfer 14 aufliegt und mit der gegenüberliegenden, dem Bediener zugewandten Seite das Berührteil 5 abstützt. Der dort vorliegende Kontaktbereich 17a, 17b, in dem der Zwischenträger 3 und das Berührteil 5 aneinander angrenzend angeordnet sind, umfasst einen Verbindungsbereich 17b, in dem der Zwischenträger 3 und das Berührteil 5 durch Ultraschallverschweißen oder Verkleben stoffschlüssig verbunden sind, wohingegen in dem bezüglich des Verbindungsbereichs 17b innen liegenden und außerhalb des Verbindungsbereichs liegenden Bereich 17a des Kontaktbereichs 17a, 17b lediglich ein loser Kontakt zwischen dem Zwischenträger 3 und dem Berührteil 5 besteht. Der Schwingungsdämpfer 14 wirkt rückstellend und schwingungsdämpfend. In einem vom Zwischenträger 3 ausgebildeten und ferner vom dem Berührteil nach oben in Richtung Bediener begrenzten Hohlvolumen 16 ist ein aktiver Aktuator 4 in Form eines Tauchspulenaktuators vorgesehen, der dazu dient, bedarfsweise Schwingungen in dem Zwischenträger 3 zu erzeugen, die an das Berührteil 5 übertragen werden, um auf dessen Berührfläche 18 ein für ein Bediener haptisch merkbares Feedback zu erzeugen. Das Berührteil 5 ist durch Hinterspritzen einer Folie 5a mit einem Thermoplast hergestellt, wobei der Thermoplast die dem Bediener abgewandte Thermoplastschicht 5b ausbildet. Die Berührfläche 18 bildet eine Senke 19 zur haptischen Orientierung, auch Fühlhilfe genannt, aus. Ferner sind mehrere Durchbrüche im Zwischenträger ausgebildet, in denen die Durchbrüche durchgreifend mehrere Lichtleiter 11 zur Hinterleuchtung transluzenter Anzeigenbereiche des Berührteils 5 angeordnet sind. Die zugehörigen Leuchtmittel 13, ein optischer oder kapazitiver Kraftsensor 8 sowie eine Steuerelektronik 12, die mit dem Aktuator 4 und mit dem Kraftsensor 8 elektrisch leitend verbunden ist, sind auf einer Leiterplatte 7 angeordnet, die auf der dem Bediener abgewandten Seite des Zwischenträgers 3 zwischen dem Zwischenträger 3 und dem Träger 2 an letzterem festgelegt ist.

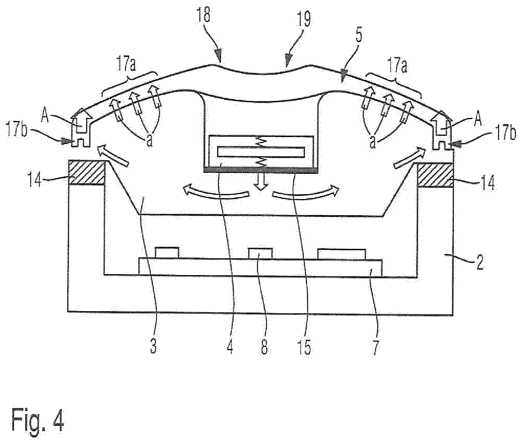

Auf der Leiterplatte 7 ist ferner ein optischer oder kapazitiv detektierender Kraftsensor 8 angeordnet und mit der Steuerelektronik 12 elektrisch leitend verbunden, der durch Detektion der Annäherung des Zwischenträgers 3 an den Träger 2 bei Einwirken einer Betätigungskraft auf die Berührfläche 18 des Berührteils 5 in der Lage ist, die dabei wirkende Kraft quantitativ zu ermitteln. So wird sobald eine eine vorgegebene Betätigungskraft überschreitende Krafteinwirkung auf das Berührteil 5 bzw. den Zwischenträger 3 durch den Kraftsensor 8 detektiert wird, eine Erzeugung eines haptischen Feedbacks getriggert, indem der ausschließlich am Zwischenträger 3 festgelegte Aktuator 6 mit einem Ansteuersignal durch die Steuerelektronik 12 beaufschlagt wird, was ausführlich in Bezug auf die Figuren 5a bis 5c nachfolgend erläutert wird. Die bewirkte und gewollte Anregung aber vor Allem ungewollte Nachschwingungen des Aktuators 4 erfahren durch einen zwischen dem Aktuator 4 und dem Zwischenträger 3 angeordneten, weiteren Schwingungsdämpfer 15 aus einem Elastomermaterial eine Dämpfung, Die Ausbreitung und Verteilung einer vom Aktuator 4 im Zwischenträger 3 erzeugten Schwingung bis hin zur Berührfläche 18 wird nachfolgend in Bezug auf Figur 4 eingehend erläutert.

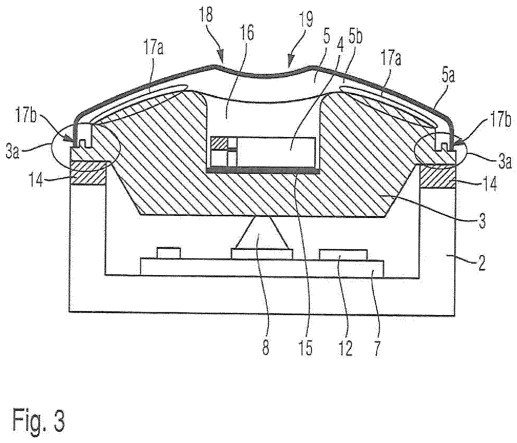

Figur 3 zeigt eine dritte Ausführungsform eines erfindungsgemäßen Bedienelements 1. Das Bedienelement 1 weist einen Träger 2 zur Festlegung an einer nicht dargestellten Innenverkleidung eines Kraftfahrzeugs auf. An dem Träger 2 stützt sich über mehrere als Elastomerkörper ausgebildete Schwingungsdämpfer 14 der Zwischenträger 3 elastisch nachgebend ab. Dazu weist der Zwischenträger 3 einen am Rand des Zwischenträgers 3 umlaufende Auskragung 3a auf, die mit ihrer dem Bediener abgewandten Seite auf dem Schwingungsdämpfer 14 aufliegt und mit der gegenüberliegenden, dem Bediener zugewandten Seite das Berührteil 5 abstützt. Der dort vorliegende Kontaktbereich 17a, 17b, in dem der Zwischenträger 3 und das Berührteil 5 aneinander angrenzend angeordnet sind, umfasst einen Verbindungsbereich 17b, in dem der Zwischenträger 3 und das Berührteil 5 durch Ultraschallverschweißen oder Verkleben stoffschlüssig verbunden sind, wohingegen in dem bezüglich des Verbindungsbereich 17b innen liegenden und außerhalb des Verbindungsbereichs 17b liegenden Bereich 17a des Kontaktbereichs 17a, 17b lediglich ein loser Kontakt zwischen dem Zwischenträger 3 und dem Berührteil 5 besteht. Der Schwingungsdämpfer 14 wirkt rückstellend und schwingungsdämpfend. In einem vom Zwischenträger 3 ausgebildeten und ferner vom dem Berührteil nach oben in Richtung Bediener begrenzten Hohlvolumen 16 ist ein aktiver Aktuator 4 in Form eines auf Trägheit beruhenden, motorbasierten Aktuators vorgesehen, der dazu dient, bedarfsweise Schwingungen in dem Zwischenträger 3 zu erzeugen, die an das Berührteil 5 übertragen werden, um auf dessen Berührfläche 18 ein für ein Bediener haptisch merkbares Feedback zu erzeugen. Das Berührteil 5 ist durch Hinterspritzen einer Folie 5a mit einem Thermoplast hergestellt, wobei der Thermoplast die dem Bediener abgewandte Thermoplastschicht 5b ausbildet. Die Berührfläche 18 bildet eine Senke 19 zur haptischen Orientierung, auch Fühlhilfe genannt, aus. Ein optischer Kraftsensor 8 sowie eine Steuerelektronik 12, die mit dem Aktuator 4 und mit dem Kraftsensor 8 elektrisch leitend verbunden ist, sind auf einer Leiterplatte 7 angeordnet, die auf der dem Bediener abgewandten Seite des Zwischenträgers 3 zwischen dem Zwischenträger 3 und dem Träger 2 an letzterem festgelegt ist.

Auf der Leiterplatte 7 ist ferner ein optischer detektierender Kraftsensor 8 angeordnet und mit der Steuerelektronik 12 elektrisch leitend verbunden, der durch Detektion der Annäherung des Zwischenträgers 3 an den Träger 2 bei Einwirken einer Betätigungskraft auf die Berührfläche 18 des Berührteils 5 in der Lage ist, die dabei wirkende Kraft quantitativ zu ermitteln. So wird sobald eine eine vorgegebene Betätigungskraft überschreitende Krafteinwirkung auf das Berührteil 5 bzw. den Zwischenträger 3 durch den Kraftsensor 8 detektiert wird, eine Erzeugung eines haptischen Feedbacks getriggert, indem der Aktuator 6 mit einem Ansteuersignal durch die Steuerelektronik 12 beaufschlagt wird, was ausführlich in Bezug auf die Figuren 5a bis 5c nachfolgend erläutert wird. Die bewirkte und gewollte Anregung aber vor Allem ungewollte Nachschwingungen des Aktuators 4 erfahren durch einen zwischen dem Aktuator 4 und dem Zwischenträger 3 angeordneten, weiteren Schwingungsdämpfer 15 aus einem Elastomermaterial eine Dämpfung. Die Ausbreitung und Verteilung einer vom Aktuator 4 im Zwischenträger 3 erzeugten Schwingung bis hin zur Berührfläche 18 wird nachfolgend in Bezug auf Figur 4 eingehend erläutert.

Figur 4 zeigt, dass eine bei Berührung oder ausreichender Betätigung getriggerte Anregung des Aktuators 4, die allenfalls durch den weiteren, zwischen dem Aktuator 4 und dem Zwischenträger 3 angeordneten Schwingungsdämpfer 15 beim Übertritt in den Zwischenträger 3 gedämpft wurde, sich in dem Zwischenträger 3 als Schwingung, deren Ausbreitung durch die Pfeile lediglich schematisch angedeutet ist, ausbreitet, um zur Kontaktfläche 17a, 17b zu gelangen, an der das Berührteil 5 an den Zwischenträger 3 grenzt. Der Verbindungsbereich 17b der Kontaktfläche 17a, 17b, in dem eine stoffschlüssige Verbindung zwischen dem Zwischenträger 3 und dem Berührteil 5 besteht, sorgt für eine besonders effektiven Schwingungsübergang A, da u.a. Grenzflächenreflexionen vermieden werde, wohingegen in dem außerhalb dieses Verbindungsbereichs 17b liegenden Bereich 17a der Kontaktfläche 17a, 17b wegen des lediglich vorhandenen losen Kontakts ein bezüglich der Amplitude geringerer Schwingungsübergang a bewirkt wird. Je nach Ausgestaltung der Kontaktfläche 17a, 17b und spezifischer Lage des zugehörigen Verbindungsbereichs 17b ergibt sich eine entsprechende Schwingungsverteilung im Berührteil 5. Beispielsweise kann die von der Berührfläche 18 des Berührteils 5 ausgebildete Vertiefung 19 eine über die Berührfläche 18 variierende Geometrie der Auflagefläche des Fingers des Bedieners (auch Fingerauflagefläche genannt) bei gleichem Anpressdruck des Fingers bewirken, da an stark gerkrümmten oder unstetigen Übergängen die Kopplung zwischen Finger und Berührfläche ausgeprägt ist, wird hier das haptische Feedback stärker wahrgenommen als an anderen Stellen der Berührfläche 18. Dadurch dass nunmehr die starke Einkopplung über bezüglich der Fühlhilfe 19 entfernt liegende Verbindungsbereiche 17b erfolgt, kann dem mit dem Ziel eines gleichmäßigeren haptischen Feedbacks über die Berührfläche 18 hinweg Rechnung getragen werden.

Die Figuren 5a bis 5c zeigen erfindungsgemäße Anregungssignale A₁ bis A₃ und zugehörige auf die Anregung folgende und dadurch bewirkte Systemantworten S₁ bis S₃, welche das jeweils auf der Berührfläche 18 (der Fig. 1-4) beispielsweise mit einem Vibrometer abgetastete Schwingungsverhalten ist. So erzeugt das sich auf einen Impuls einer Polarität beschränkende Ansteuersignal A₁ eine entsprechende, aufgrund der Schwingungsdämpfer 14, 15 (der Fig. 1-4) gedämpfte und eine damit abklingende Schwingung als Systemantwort S₁. Anregungssignal A₁ und Dämpfung sind so eingestellt, dass die maximal erreichbare Amplitude der Systemantwort, auch absolute Maximalamplitude Xₘₐₓ genannt, mit der ersten, wie hier gezeigt, oder spätestens zweiten Auslenkung erreich wird.

Bevorzugt wird, wie Fig. 5b zeigt, darauf geachtet, dass das Ansteuersignal A₂ in Dauer und Verlauf, hier weist es eine Periode und damit eine Pulsfolge aus Pulsen entgegengesetzter Polarität auf, dass die maximal erreichbare Amplitude der Systemantwort, auch absolute Maximalamplitude Xₘₐₓ genannt, innerhalb eines Zeitfensters von < 20ms, erreicht ist, wobei das vorgenannte Zeitfenster durch den Beginn des Ansteuersignals angetriggert ist.

Figur 5c zeigt eine Ausführungsform des Ansteuersignals A₃ mit einer zwei Perioden umfassenden Pulsfolge. Anregungssignal A₃ und Dämpfung sind so eingestellt, dass die maximal erreichbare Amplitude der Systemantwort, auch absolute Maximalamplitude Xₘₐₓ genannt, mit der zweiten Auslenkung erreich wird. Ferner ist der Zwischenträger 3 (der Fig. 1-4) durch den ersten Schwingungsdämpfer 14 (der Fig. 1-4) und/oder der Aktuator 4 (der Fig. 1-4) mittels des weiteren Schwingungsdämpfers 15 (der Fig. 1-4) so bedämpft, dass die "Abklingzeit" der am Berührteil 5 (der Fig. 1-4) gemessenen Systemamplitude, gemessen von 100% der Maximalamplitude auf 10% oder weniger der Maximalamplitude, 20ms ist.

## Patentansprüche

1. Bedienelement (1), aufweisend:
einen Träger (2);
einen sich mittels einem oder mehrerer Schwingungsdämpfer (14) am Träger (2) abstützenden Zwischenträger (3);
ein Berührteil (5), welches eine einem Bediener zugewandte Berührfläche (18) zur Vornahme einer Bedieneingabe durch einen Bediener aufweist und mit dem Zwischenträger (3) verbunden ist;
einen Aktuator (4);
wobei das Berührteil (5) mit seiner der Berührfläche (18) abgewandten Seite an den Zwischenträger (3) unter Ausbildung einer gemeinsamen Kontaktfläche (17a, 17b) angrenzend angeordnet ist, um über die Kontaktfläche (17a, 17b) die Schwingung zur Erzeugung eines an der Berührfläche (18) haptisch merkbaren Feedbacks von dem Zwischenträger (3) in das Berührteil (5) einzukoppeln;
einen Sensor (6, 8) zur Detektion einer Betätigung des Berührteils (5) und/oder einer Berührung der Berührfläche (18);
eine mit dem Aktuator (4) und dem Sensor (6, 8) elektrisch verbundene Steuerelektronik (12), um das haptische Feedback durch Beaufschlagung des Aktuators (4) mit einem Ansteuersignal zu triggern;
wobei der Aktuator ausgebildet ist, eine Schwingung in dem Zwischenträger (3) anzuregen, **dadurch gekennzeichnet, dass** die Kontaktfläche (17a, 17b) eine oder mehrere, im Vergleich zur Gesamtheit der Kontaktfläche (17a, 17b) kleinere Verbindungsbereiche (17b) umfasst, in denen der Zwischenträger (3) mit dem Berührteil (5) stoffschlüssig verbunden ist, und dass der Aktuator (4) ausschließlich am Zwischenträger (3) festgelegt ist.

2. Bedienelement (1) gemäß Anspruch 1, wobei der Schwingungsdämpfer (14)
jeweils ausgebildet ist, eine Rückstellung des Berührteils (5) samt des Zwischenträgers (3) aus einer Betätigungsstellung in eine Ruhestellung zu bewirken.

3. Bedienelement (1) gemäß einem der vorhergehenden Ansprüche, wobei der Verbindungsbereich (17b) jeweils versetzt zum Lot durch den geometrischen Mittelpunkt der Berührfläche (18) angeordnet ist.

4. Bedienelement (1) gemäß einem der vorhergehenden Ansprüche, wobei der Verbindungsbereich (17b) benachbart zu einem äußeren Rand der Berührfläche (18) und entlang des Randes umlaufend oder entlang des Randes gleichmäßig verteilt angeordnet ist.

5. Bedienelement (1) gemäß einem der vorhergehenden Ansprüche, wobei der Verbindungsbereich (17b) durch Verschweißen des Zwischenträgers (3) mit dem Berührteil (5) ausgebildet ist.

6. Bedienelement (1) gemäß einem der vorhergehenden Ansprüche, wobei im dem außerhalb des oder der Verbindungsbereiche (17b) liegenden Bereich (17a) der Kontaktfläche (17a, 17b) das Berührteil (5) lose am Zwischenträger (3) anliegt.

7. Bedienelement (1) gemäß einem der vorhergehenden Ansprüche, wobei der Sensor (6, 8) ein Berührungssensor zur Detektion einer Berührung der Berührfläche (18) oder ein Kraftsensor zur Messung einer durch eine Betätigung bewirkten Verlagerung und/oder durch die Betätigung bewirkten, elastischen Verformung des Berührteils (5) ist.

8. Bedienelement (1) gemäß einem der vorhergehenden Ansprüche, wobei der Schwingungsdämpfer (14) ein ein oder mehrere Elastomere aufweisender, bevorzugt ein silikonhaltiges Elastomer aufweisender, Körper ist.

9. Bedienelement (1) gemäß einem der vorhergehenden Ansprüche, wobei der Aktuator (4) ausgewählt ist aus der Gruppe bestehend aus:
einem Magnetspulen-Aktuator;
einem piezoelektrischen Aktuator;
einem linearen Breitbandaktuator, wie einem Tauchspulenaktuator;
einem linearen Resonanzaktuator; und
einem auf Trägheit beruhenden, motorbasierten Aktuator, wie einem Motor mit exzentrisch rotierender Masse.

10. Bedienelement (1) gemäß einem der vorhergehenden Ansprüche, wobei der Aktuator (4) in einem vom Zwischenträger (3) und dem Berührteil (5) begrenzten Hohlvolumen (16) angeordnet ist.

11. Bedienelement (1) gemäß einem der vorhergehenden Ansprüche, wobei das Berührteil (5) in der Berührfläche (18) eine Erhebung oder Senke (19) als haptische Orientierungshilfe ausbildet.

12. Bedienelement (1) gemäß einem der vorhergehenden Ansprüche, wobei der Verbindungsbereich (17b) jeweils an einer Auskragung (3b) des Zwischenträgers (3) ausgebildet ist, mittels der sich der Zwischenträger (3) über den Schwingungsdämpfer (14) am Träger (2) abstützt.

13. Bedienelement (1) gemäß einem der vorhergehenden Ansprüche, wobei das Berührteil (5) und der Zwischenträger (3) zumindest im Verbindungsbereich (17b) jeweils aus einem Thermoplast ausgebildet sind.

14. Bedienelement (1) gemäß einem der vorhergehenden Ansprüche, wobei der Aktuator (4) am Zwischenträger (3) kraft- oder stoffschlüssig festgelegt ist.

15. Bedienelement (1) gemäß einem der vorhergehenden Ansprüche, wobei der Aktuator (4) über einen weiteren Schwingungsdämpfer (15) am Zwischenträger (3) festgelegt ist.

16. Bedienelement (1) gemäß einem der vorhergehenden Ansprüche, wobei das Ansteuersignal (A₁, A₂, A₃) und eine durch den Schwingungsdämpfer (14) und den gegebenenfalls vorgesehenen weiteren Schwingungsdämpfer (15) bewirkte Dämpfung so gewählt sind, dass ein absolute Maximalamplitude (Xₘₐₓ) einer am Berührteil (5) gemessenen Systemantwort (S₁, S₂, S₃) auf die durch das Ansteuersignal (A₁, A₂, A₃) getriggerte Anregung mittels des Aktuators (4) in einem ersten maximalen zeitlichen Abstand (t₁) von 20ms nach einem Start des Ansteuersignals (A₁, A₂, A₃) erfolgt.

17. Bedienelement (1) gemäß einem der vorhergehenden Ansprüche, wobei eine durch den Schwingungsdämpfer (14) und den gegebenenfalls vorgesehenen weiteren Schwingungsdämpfer (15) bewirkte Dämpfung so gewählt sind, dass ein Abklingzeitpunkt, bei dem die Maximalamplitude der Systemantwort (S₁, S₂, S₃) auf 10 % oder weniger der absoluten Maximalamplitude (Xₘₐₓ) abgeklungen ist, der vorher erreichten absoluten Maximalamplitude (Xₘₐₓ) in einem zweiten zeitlichen Abstand (t₂) von maximal 30ms folgt.

18. Bedienelement (1) gemäß einem der vorhergehenden Ansprüche, wobei eine Resonanzfrequenz des Aktuators (4) im Bereich von 110 bis 170 Hz, bevorzugt im Bereich von 130Hz bis 150Hz, liegt.

19. Bedienelement (1) gemäß einem der vorhergehenden Ansprüche, wobei das Berührteil (5) und/oder der Zwischenträger (3) in einem Thermoplast-Spritzgussverfahren hergestellt sind.

20. Verwendung des Bedienelements (1) gemäß einem der vorhergehenden Ansprüche in einem Kraftfahrzeug.

## Claims

1. Operator control element (1), comprising:
a carrier (2);
an intermediate carrier (3) supported on the carrier (2) by means of one or more vibration dampers (14);
a touch part (5) which has a touch surface (18) facing an operator for an operator to make an operator control input and is connected to the intermediate carrier (3);
an actuator (4);
wherein the touch part (5), by way of its side facing away from the touch surface (18), is arranged adjoining the intermediate carrier (3) so as to form a common contact surface (17a, 17b) in order to couple the vibration for generating feedback, which is haptically perceptible on the touch surface (18), from the intermediate carrier (3) to the touch part (5) via the contact surface (17a, 17b);
a sensor (6, 8) for detecting operation of the touch part (5) and/or touching of the touch surface (18);
a control electronics system (12), which is electrically connected to the actuator (4) and the sensor (6, 8), in order to trigger the haptic feedback by applying a drive signal to the actuator (4);
wherein the actuator is designed to excite a vibration in the intermediate carrier (3), **characterized in that** the contact surface (17a, 17b) comprises one or more connecting regions (17b) which are smaller than the total contact surface (17a, 17b) and in which the intermediate carrier (3) is connected in an integrally joined manner to the touch part (5), and **in that** the actuator (4) is fixed only to the intermediate carrier (3).

2. Operator control element (1) according to Claim 1, wherein the vibration damper (14) is designed to in each case cause the touch part (5) together with the intermediate carrier (3) to return from an operation position to a rest position.

3. Operator control element (1) according to either of the preceding claims, wherein the connecting region (17b) is in each case arranged offset in relation to the perpendicular through the geometric centre of the touch surface (18).

4. Operator control element (1) according to any of the preceding claims, wherein the connecting region (17b) is arranged adjacent to an outer edge of the touch surface (18) and encircling along the edge or uniformly distributed along the edge.

5. Operator control element (1) according to any of the preceding claims, wherein the connecting region (17b) is formed by welding the intermediate carrier (3) to the touch part (5).

6. Operator control element (1) according to any of the preceding claims, wherein the touch part (5) rests loosely against the intermediate carrier (3) in the region (17a) of the contact surface (17a, 17b) situated outside the connecting region or regions (17b).

7. Operator control element (1) according to any of the preceding claims, wherein the sensor (6, 8) is a touch sensor for detecting touching of the touch surface (18) or a force sensor for measuring displacement caused by operation and/or elastic deformation of the touch part (5) caused by operation.

8. Operator control element (1) according to any of the preceding claims, wherein the vibration damper (14) is a body having one or more elastomers, preferably having a silicone-containing elastomer.

9. Operator control element (1) according to any of the preceding claims, wherein the actuator (4) is selected from the group consisting of:
a solenoid actuator;
a piezoelectric actuator;
a linear broadband actuator, such as a voice coil actuator;
a linear resonant actuator; and
an inertia-based, motor-based actuator, such as a motor with an eccentrically rotating mass.

10. Operator control element (1) according to any of the preceding claims, wherein the actuator (4) is arranged in a hollow volume (16) delimited by the intermediate carrier (3) and the touch part (5).

11. Operator control element (1) according to any of the preceding claims, wherein the touch part (5) forms a raised portion or sink (19) as a haptic orientation aid in the touch surface (18).

12. Operator control element (1) according to any of the preceding claims, wherein the connecting region (17b) is each formed on a cantilever (3b) of the intermediate carrier (3), the intermediate carrier (3) being supported on the carrier (2) via the vibration damper (14) by means of the cantilever.

13. Operator control element (1) according to any of the preceding claims, wherein the touch part (5) and the intermediate carrier (3) are each formed from a thermoplastic at least in the connecting region (17b).

14. Operator control element (1) according to any of the preceding claims, wherein the actuator (4) is fixed in a frictionally locking or integrally joined manner to the intermediate carrier (3).

15. Operator control element (1) according to any of the preceding claims, wherein the actuator (4) is fixed to the intermediate carrier (3) via a further vibration damper (15).

16. Operator control element (1) according to any of the preceding claims, wherein the drive signal (A₁, A₂, A₃) and damping caused by the vibration damper (14) and the optionally provided further vibration damper (15) are selected such that an absolute maximum amplitude (Xₘₐₓ) of a system response (S₁, S₂, S₃) measured at the touch part (5) to the excitation triggered by the drive signal (A₁, A₂, A₃) by means of the actuator (4) takes place in a first maximum time interval (t₁) of 20 ms after the drive signal (A₁, A₂, A₃) starts.

17. Operator control element (1) according to any of the preceding claims, wherein damping caused by the vibration damper (14) and the optionally provided further vibration damper (15) is selected such that a decay time, at which the maximum amplitude of the system response (S₁, S₂, S₃) has decayed to 10% or less of the absolute maximum amplitude (Xₘₐₓ), follows the previously achieved absolute maximum amplitude (Xₘₐₓ) in a second time interval (t₂) of at most 30 ms.

18. Operator control element (1) according to any of the preceding claims, wherein a resonant frequency of the actuator (4) lies in the range of 110 to 170 Hz, preferably in the range of 130 Hz to 150 Hz.

19. Operator control element (1) according to any of the preceding claims, wherein the touch part (5) and/or the intermediate carrier (3) are produced in a thermoplastic injection-moulding process.

20. Use of the operator control element (1) according to any of the preceding claims in a motor vehicle.

## Revendications

1. Élément de commande (1), présentant :
un support (2) ;
un support intermédiaire (3) s'appuyant sur le support (2) au moyen d'un ou de plusieurs amortisseurs de vibrations (14) ;
une partie tactile (5), qui présente une surface tactile (18) tournée vers un opérateur pour effectuer une entrée de commande par un opérateur et qui est reliée au support intermédiaire (3) ;
un actionneur (4) ;
la partie tactile (5) étant agencée de manière adjacente au support intermédiaire (3) avec son côté détourné de la surface tactile (18) en réalisant une surface de contact commune (17a, 17b), afin d'injecter la vibration du support intermédiaire (3) dans la partie tactile (5) par l'intermédiaire de la surface de contact (17a, 17b) pour générer un retour perceptible au toucher sur la surface tactile (18) ;
un capteur (6, 8) pour détecter un actionnement de la partie tactile (5) et/ou un contact avec la surface tactile (18) ;
une électronique de commande (12) reliée électriquement à l'actionneur (4) et au capteur (6, 8), afin de déclencher le retour haptique en sollicitant l'actionneur (4) avec un signal de commande ;
l'actionneur étant réalisé pour exciter une vibration dans le support intermédiaire (3), **caractérisé en ce que** la surface de contact (17a, 17b) comprend une ou plusieurs zones de liaison (17b) plus petites par rapport à l'ensemble de la surface de contact (17a, 17b), dans lesquelles le support intermédiaire (3) est relié à la partie tactile (5) par liaison de matière, et **en ce que** l'actionneur (4) est fixé exclusivement au support intermédiaire (3).

2. Élément de commande (1) selon la revendication 1, dans lequel l'amortisseur de vibrations (14) est respectivement réalisé pour provoquer un rappel de la partie tactile (5), y compris le support intermédiaire (3), d'une position d'actionnement dans une position de repos.

3. Élément de commande (1) selon l'une quelconque des revendications précédentes, dans lequel la zone de liaison (17b) est respectivement agencée en décalage par rapport à la perpendiculaire passant par le centre géométrique de la surface tactile (18).

4. Élément de commande (1) selon l'une quelconque des revendications précédentes, dans lequel la zone de liaison (17b) est adjacente à un bord extérieur de la surface tactile (18) et est agencée de manière circonférentielle le long du bord ou répartie uniformément le long du bord.

5. Élément de commande (1) selon l'une quelconque des revendications précédentes, dans lequel la zone de liaison (17b) est réalisée par soudage du support intermédiaire (3) avec la partie tactile (5).

6. Élément de commande (1) selon l'une quelconque des revendications précédentes, dans lequel, dans la zone (17a) de la surface de contact (17a, 17b) située à l'extérieur de la ou des zones de liaison (17b), la partie tactile (5) est en appui libre sur le support intermédiaire (3).

7. Élément de commande (1) selon l'une quelconque des revendications précédentes, dans lequel le capteur (6, 8) est un capteur de contact pour détecter un contact avec la surface tactile (18) ou un capteur de force pour mesurer un déplacement provoqué par un actionnement et/ou une déformation élastique de la partie tactile (5) provoquée par l'actionnement.

8. Élément de commande (1) selon l'une quelconque des revendications précédentes, dans lequel l'amortisseur de vibrations (14) est un corps présentant un ou plusieurs élastomères, de préférence présentant un élastomère contenant de la silicone.

9. Élément de commande (1) selon l'une quelconque des revendications précédentes, dans lequel l'actionneur (4) est choisi dans le groupe constitué par :
un actionneur à bobine magnétique ;
un actionneur piézoélectrique ;
un actionneur linéaire à large bande, tel qu'un actionneur à bobine mobile ;
un actionneur à résonance linéaire ; et
un actionneur à base de moteur basé sur l'inertie, tel qu'un moteur à masse rotative excentrée.

10. Élément de commande (1) selon l'une quelconque des revendications précédentes, dans lequel l'actionneur (4) est agencé dans un volume creux (16) délimité par le support intermédiaire (3) et la partie tactile (5).

11. Élément de commande (1) selon l'une quelconque des revendications précédentes, dans lequel la partie tactile (5) réalise dans la surface tactile (18) une élévation ou une dépression (19) en tant qu'aide à l'orientation haptique.

12. Élément de commande (1) selon l'une quelconque des revendications précédentes, dans lequel la zone de liaison (17b) est réalisée respectivement sur une saillie (3b) du support intermédiaire (3), au moyen de laquelle le support intermédiaire (3) prend appui sur le support (2) par l'intermédiaire de l'amortisseur de vibrations (14).

13. Élément de commande (1) selon l'une quelconque des revendications précédentes, dans lequel la partie tactile (5) et le support intermédiaire (3) sont réalisés chacun en un matériau thermoplastique au moins dans la zone de liaison (17b).

14. Élément de commande (1) selon l'une quelconque des revendications précédentes, dans lequel l'actionneur (4) est fixé au support intermédiaire (3) par adhérence ou par liaison de matière.

15. Élément de commande (1) selon l'une quelconque des revendications précédentes, dans lequel l'actionneur (4) est fixé au support intermédiaire (3) par l'intermédiaire d'un autre amortisseur de vibrations (15).

16. Élément de commande (1) selon l'une quelconque des revendications précédentes, dans lequel le signal de commande (A₁, A₂, A₃) et un amortissement provoqué par l'amortisseur de vibrations (14) et l'autre amortisseur de vibrations (15) éventuellement prévu sont choisis de telle sorte qu'une amplitude maximale absolue (Xₘₐₓ) d'une réponse de système (S₁, S₂, S₃) mesurée sur la partie tactile (5) à l'excitation déclenchée par le signal de commande (A₁, A₂, A₃) a lieu au moyen de l'actionneur (4) dans un premier intervalle de temps maximal (t₁) de 20 ms après un démarrage du signal de commande (A₁, A₂, A₃).

17. Élément de commande (1) selon l'une quelconque des revendications précédentes, dans lequel un amortissement provoqué par l'amortisseur d'oscillations (14) et l'autre amortisseur d'oscillations (15) éventuellement prévu sont choisis de telle sorte qu'un instant d'affaiblissement, auquel l'amplitude maximale de la réponse de système (S₁, S₂, S₃) s'est affaiblie à 10 % ou moins de l'amplitude maximale absolue (Xₘₐₓ), suit l'amplitude maximale absolue (Xₘₐₓ) atteinte auparavant à un deuxième intervalle de temps (t₂) de 30 ms au maximum.

18. Élément de commande (1) selon l'une quelconque des revendications précédentes, dans lequel une fréquence de résonance de l'actionneur (4) se situe dans la plage de 110 à 170 Hz, de préférence dans la plage de 130 Hz à 150 Hz.

19. Élément de commande (1) selon l'une quelconque des revendications précédentes, dans lequel la partie tactile (5) et/ou le support intermédiaire (3) sont fabriqués par un procédé de moulage par injection de matière thermoplastique.

20. Utilisation de l'élément de commande (1) selon l'une quelconque des revendications précédentes dans un véhicule automobile.
